# EUROPÄISCHE PATENTSCHRIFT

(11) **EP 2 603 772 B1**
(45) Veröffentlichungstag und Bekanntmachung des Hinweises auf die Patenterteilung: **11.06.2014**
(21) Anmeldenummer: 11743790.5
(22) Anmeldetag: 11.07.2011
(51) Int. Cl.: G01D 5/14, G05B 1/03, G05B 23/02

(54) **SCHALTUNG ZUM REGELN UND ÜBERWACHEN EINES SIGNALSTROMS UND MESSUMFORMER MIT EINER SOLCHEN SCHALTUNG**
CIRCUIT FOR CONTROLLING AND MONITORING A SIGNAL CURRENT AND MEASUREMENT TRANSDUCER HAVING SUCH A CIRCUIT
CIRCUITERIE DE RÉGULATION ET DE SURVEILLANCE D'UN COURANT DE SIGNAL ET TRANSDUCTEUR DE MESURE COMPRENANT UNE TELLE CIRCUITERIE

(30) Priorität: 12.08.2010 DE 102010039271
(43) Veröffentlichungstag der Anmeldung: 19.06.2013
(73) Patentinhaber: Endress+Hauser GmbH+Co. KG, 79689 Maulburg (DE)
(72) Erfinder: STIB, Ralph, 79677 Schönau (DE); TRUNZER, Wolfgang, 79540 Lörrach (DE)
(74) Vertreter: Andres, Angelika Maria
(86) Internationale Anmeldenummer: PCT/EP2011/061722
(87) Internationale Veröffentlichungsnummer: WO 2012/019840

(56) Entgegenhaltungen:
- DE-A1- 19 902 031
- DE-A1-102008 001 832
- US-A1- 2005 030 185
- US-A1- 2008 007 307
- US-A1- 2009 243 564
- US-B1- 6 629 638

## Beschreibung

Die vorliegende Erfindung betrifft eine Schaltung zum Überwachen und Regeln eines Signalstroms, welcher einen Zielwert, insbesondere einen Messwert oder einen Regelwert repräsentiert, und einen Messumformer mit einer solchen Schaltung. Insbesondere in der Prozessautomatisierungstechnik werden Messumformer eingesetzt, welche derartige Signalströme zur Ausgabe eines Messsignals verwenden, beispielsweise zwischen 4 und 20 mA. Insbesondere im Zusammenhang mit verschiedenen Sicherheitserfordernissen, beispielsweise SIL 2 (nach dem Englischen: Safety Integrity Level 2) ist es erforderliche, das Fehler in der Übertragungsfunktion eines Messgeräts zuverlässig und schnell erkannt und signalisiert werden. Ein Messumformer, der eine entsprechende Überwachungsfunktion aufweist, ist in der Offenlegungsschrift DE 10 2008 001 832 A1 offenbart. Hierbei wird nach einer digitalen Ermittlung des Messwerts, eine analoge Sollgröße als Spannungswert zum Stellen des Signalstroms bereitgestellt. Der Spannungsabfall über einem Shuntwiderstand, über den der Signalstrom fließt, wird ausgewertet, um festzustellen, ob der tatsächlich fließende Signalstrom der Sollgröße entspricht. Der beschriebene Stand der Technik kann jedoch nicht feststellen, ob die gestellte Sollgröße oder der fließende Strom tatsächlich noch dem digital ermittelten Messwert entsprechen. Eine erneute Digitalisierung des ermittelten Spannungsabfalls über dem Shuntwiderstand mit einer nachfolgenden Berechnung des Stroms bietet zwar eine weitere Möglichkeit zur Verifizierung der Übertragungsfunktion, aber diese Vorgehensweise ist insbesondere bei dynamischen Vorgängen ggf. zu langsam.

Es ist daher die Aufgabe der Erfindung, eine Schaltung zur verbesserten Überwachung des Signalstroms und einen Messumformer mit einer solchen Schaltung bereitzustellen. Die Aufgabe wird erfindungsgemäß gelöst durch die Schaltung gemäß dem unabhängigen Patentanspruch 1 und den Messumformer gemäß dem unabhängigen Patentanspruch 14. Die Erfindung stellt eine Schaltung bereit zur Regelung und Überwachung eines Signalstroms, welcher einen Zielwert, insbesondere einen Messwert oder eine Regelwert repräsentiert, wobei die Schaltung umfasst: einen Regelkreis; und einen Überwachungskreis, wobei der Regelkreis umfasst: eine erste Steuerspannungsquelle, zum Ausgeben einer zielwertabhängigen Steuerspannung; eine Stromstellerschaltung, zum Stellen des Signalstroms in Abhängigkeit von der Steuerspannung und einer ersten Rückkopplungsspannung mittels eines regelbaren Widerstands; und einen ersten Rückkopplungspfad, mit mindestens einem ersten Widerstandselement, über welches der Signalstrom fließt, wobei der Spannungsabfall über dem Widerstandselement oder eine davon abhängige Spannung der Stromstellerschaltung als erste Rückkopplungsspannung zugeführt wird; wobei der Überwachungskreis erfindungsgemäß umfasst: eine zweite Steuerspannungsquelle, zum Ausgeben einer zweiten zielwertabhängigen Steuerspannung; eine analoge Überwachungsschaltung, zum Feststellen von Abweichungen zwischen der zweiten Steuerspannung und einer zweiten Rückkopplungsspannung, und einen zweiten Rückkopplungspfad, mit einem Widerstandselement, über welches der Signalstrom fließt, wobei der Spannungsabfall über dem Widerstandselement oder eine davon abhängige Spannung der Überwachungsschaltung als zweite Rückkopplungsspannung zugeführt wird.

In einer Ausgestaltung der Erfindung weisen die erste Steuerspannungsquelle, und die zweite Steuerspannungsquelle jeweils eine Integratorschaltung zum Integrieren einer pulsbreitenmodulierten Referenzspannung auf. In einer Weiterbildung der Erfindung weisen die beiden Integratorschaltungen im Wesentlichen die gleiche Zeitkonstante auf.

In einer weiteren Ausgestaltung der Erfindung weisen die erste Steuerspannungsquelle, und die zweite Steuerspannungsquelle jeweils eine Referenzspannungsquelle zum Ausgeben einer Referenzspannung auf.

In einer alternativen Ausgestaltung weisen die Steuerspannungsquellen jeweils einen D/A-Wandler auf, welcher ebenfalls jeweils von einer Referenzspannungsquelle gespeist wird.

In einer weiteren Ausgestaltung der Erfindung weist die Stromstellerschaltung einen ersten Operationsverstärker zum Steuern einer Transistorschaltung mittels seiner Ausgangsspannung auf, wobei der Signalstrom über den Widerstand der Transistorschaltung gestellt wird, wobei die Ausgangsspannung des ersten Operationsverstärkers abhängt von einer Abweichung zwischen der ersten Steuerspannung und der ersten Rückkopplungsspannung, wobei die Überwachungsschaltung einen zweiten Operationsverstärker zum Signalisieren einer Abweichung mittels seiner Ausgangsspannung aufweist, die Ausgangsspannung des zweiten Operationsverstärkers abhängt von einer Abweichung zwischen der zweiten Steuerspannung und der zweiten Rückkopplungsspannung.

In einer Weiterbildung dieser Ausgestaltung der Erfindung ist ein erster Eingang des ersten Operationsverstärkers an einen Knoten angeschlossen, an dem im Betrieb der Schaltung die Summe aus der ersten Steuerspannung und der ersten Rückkopplungsspannung anliegen, und wobei ein zweiter Eingang des ersten Operationsverstärkers auf Schaltungsmasse liegt.

In einer Weiterbildung dieser Ausgestaltung der Erfindung liegt im Betrieb der Schaltung an einem ersten Eingang des ersten Operationsverstärkers die erste Rückkopplungsspannung an, und an einem zweiten Eingang des ersten Operationsverstärkers liegt die erste Steuerspannung an.

In einer Weiterbildung dieser Ausgestaltung der Erfindung ist ein erster Eingang des zweiten Operationsverstärkers an einen Knoten angeschlossen, an dem im Betrieb der Schaltung die Summe aus der zweiten Steuerspannung und der zweiten Rückkopplungsspannung anliegen, wobei ein zweiter Eingang des zweiten Operationsverstärkers auf Schaltungsmasse liegt.

In einer anderen Weiterbildung dieser Ausgestaltung der Erfindung liegt im Betrieb der Schaltung an einem ersten Eingang des zweiten Operationsverstärkers die erste Rückkopplungsspannung an, wobei an einem zweiten Eingang des Operationsverstärkers die zweite Steuerspannung anliegt.

In einer Weiterbildung der Erfindung liegt im Betrieb der Schaltung der Spannungsabfall über dem ersten Widerstandselement als erste Rückkopplungsspannung über den ersten Rückkopplungspfad an der Stromstellerschaltung und als zweite Rückkopplungsspannung über den zweiten Rückkopplungspfad an der Überwachungsschaltung an.

In einer Ausgestaltung der Erfindung umfasst die Schaltung weiterhin ein zweites Widerstandselement, welches bezüglich des Signalstroms mit dem ersten Widerstandselement in Reihe geschaltet ist, wobei der Spannungsabfall über dem zweiten Widerstandselement oder eine davon abhängige Spannung als zweite Rückkopplungsspannung über den zweiten Rückkopplungspfad an der Überwachungsschaltung anliegt.

In einer anderen Weiterbildung dieser Ausgestaltung der Erfindung umfasst der zweite Rückkopplungspfad einen Differenzverstärker, dessen Ausgangsspannung eine Funktion des Spannungsabfalls über dem zweiten Widerstandselement ist, wobei die Ausgangsspannung des Differenzverstärkers als zweite Rückkopplungsspannung über den zweiten Rückkopplungspfad an der Überwachungsschaltung anliegt.

In einer Ausgestaltung der Erfindung umfassen die erste Steuerspannungsquelle und die zweite Steuerspannungsquelle jeweils einen analogen Schalter, wobei die beiden Schalter von einem Schaltausgang eines Micro-Controllers gesteuert werden, um die pulsbreitenmodulierte Spannung zu erzeugen.

Der erfindungsgemäße Messumformer umfasst einen Sensor zum Bereitstellen eines messwertabhängigen Signals; eine Signalverarbeitungsschaltung zum Ermitteln eines Zielwerts anhand des messwertabhängigen Signals, wobei der Zielwert dem Messwert entspricht; und eine erfindungsgemäße Schaltung zum Regeln und Überwachen eines Signalstroms, welcher den Zielwert repräsentiert.

Weitere Einzelheiten und Gesichtspunkte der Erfindung werden nun anhand der in den Figuren dargestellten Ausführungsbeispiele erläutert.

Es zeigt:
- Fig. 1:: ein schematisches Schaltbild des ersten Ausführungsbeispiels der vorliegenden Erfindung;
- Fig. 2:: ein schematisches Schaltbild eines zweiten Ausführungsbeispiels der vorliegenden Erfindung;
- Fig. 3:: ein schematisches Schaltbild eines dritten Ausführungsbeispiels der vorliegenden Erfindung;
- Fig. 4:: ein schematisches Schaltbild eines vierten Ausführungsbeispiels der vorliegenden Erfindung; und
- Fig. 5:: ein schematisches Schaltbild eines fünften Ausführungsbeispiels der vorliegenden Erfindung.

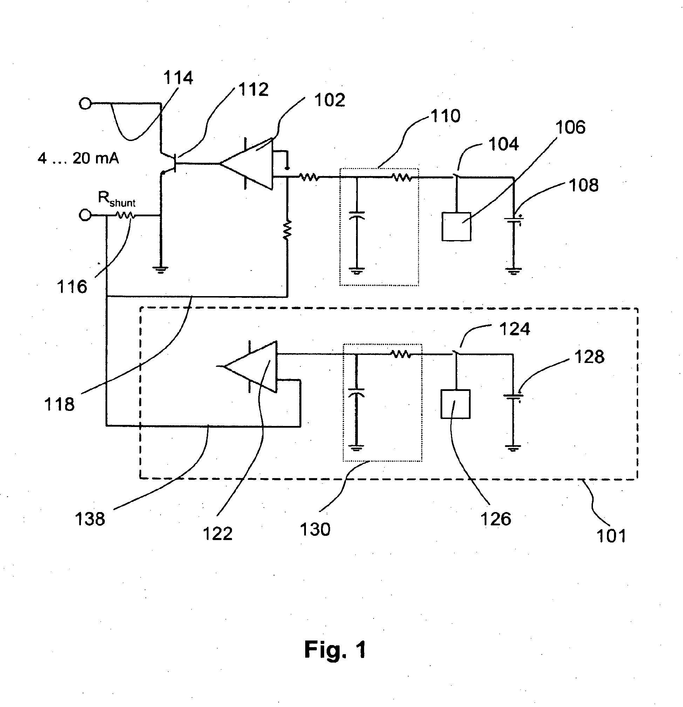

Die in Fig. 1 dargestellte Schaltung 1 zum Regeln und Überwachen eines Signalstroms umfasst einen Regelkreis 100 und einen Überwachungskreis 101. Der Regelkreis umfasst einen Operationsverstärker 102, dessen invertierender Eingang an einem Knoten angeschlossen ist, an dem die Summe aus einer Steuerspannung und einer Rückkopplungsspannung gebildet wird. Der nicht invertierende Eingang des Operationsverstärkers 102 liegt auf Schaltungsmasse. Die Steuerspannung wird über eine Steuerspannungsquelle bereitgestellt, welche den folgenden Aufbau hat. Ein Analogschalter 104 wird zum Zwecke der Pulsbreitenmodulation mittels eines Ausgangs eines Mikrocontrollers gesteuert, um die Spannung einer Referenzspannungsquelle 108, welche beispielsweise ein LT1790 mit einer Ausgangsspannung von 2,5 V von der Firma Linear Technology sein kann, pulsbreitenmoduliert auf eine Integratorschaltung 110 auszugeben, wobei der Analogschalter 104, die erste Spannungsreferenz und die erste Integratorschaltung 110 zusammen die erste Spannungsquelle bilden. Der Ausgang des Operationsverstärkers 102 ist an die Basis eines Transistors 112 angeschlossen, welcher einen Signalstrom zwischen 4 und 20 mA in einer Zweileiterschleife 114 stellt. In der Zweileiterschleife ein erstes Widerstandselement bzw. Shuntwiderstand 116 angeordnet, wobei die Spannung nach dem ersten Shuntwiderstand 116 über einen Rückkopplungspfad 118 als Rückkopplungsspannung an einem Knoten am invertierenden Eingang des Operationsverstärkers 102 zu der Steuerspannung addiert wird, die von der Steuerspannungsquelle ausgegeben wird. Der Überwachungskreis 101 umfasst eine zweite Steuerspannungsquelle, welche im Wesentlichen entsprechend der ersten Steuerspannungsquelle aufgebaut ist und funktioniert, wobei die zweite Steuerspannungsquelle eine zweite Referenzspannungsquelle 128 aufweist, welche wiederum ein LT1790 der Firma Linear Technology sein kann, wobei die zweite Spannungsreferenz 128 über einen zweiten Analogschalter 124, der ebenfalls von einem Schaltausgang eines Mikrocontrollers 126 zur Pulsbreitenmodulation gesteuert wird, an eine Integratorschaltung 130 angeschlossen ist. Der Schaltausgang zum Steuern des zweiten analogen Schalters 124 kann der gleiche Schaltausgang wie jener zum Steuern des ersten analogen Schalters 104 sein. Die von der zweiten Integratorschaltung 130 ausgegebene Steuerspannung der zweiten Steuerspannungsquelle liegt am nicht invertierenden Eingang eines zweiten Operationsverstärkers 122. Dem invertierenden Eingang des zweiten Operationsverstärkers 122 ist die Rückkopplungsspannung über einen zweiten Rückkopplungspfad 138 zugeführt.

Die Wirkungsweise der erfindungsgemäßen Schaltung ergibt sich damit folgendermaßen:

Für die folgende Betrachtung sei die Schaltungsmasse als auf dem Potential null liegend angenommen. Der Operationsverstärker 102 steuert das Gate des Transistors 112 stets so, dass die Summe aus der Rückkopplungsspannung, welche über den ersten Rückkopplungspfad 118 in dem Knoten am invertierenden Eingang des Operationsverstärkers 102 zugeführt wird, und der ersten Steuerspannung, welche ebenfalls an dem Knoten anliegt, den Wert null annimmt. Die gleiche Rückkopplungsspannung wird über einen zweiten Rückkopplungspfad 138 dem invertierenden Eingang des zweiten Operationsverstärkers 122 im Überwachungskreis zugeführt, an dessen nicht invertierendem Eingang 122 die zweite Steuerspannung anliegt. Wenn die Summe beider Spannungen ebenfalls null ist, dann gibt der zweite Operationsverstärker kein Fehlersignal aus. Insoweit, als die wesentlichen Komponenten der ersten Steuerspannungsquelle und der zweiten Steuerspannungsquelle im Wesentlichen die gleiche Funktion und Dimensionierung haben, sollte die erste Steuerspannung der zweiten Steuerspannung entsprechend, was dann wiederum bedingt, dass kein Fehlersignal vom zweiten Operationsverstärker 122 ausgegeben wird. Wenn aber entweder im Bereich der ersten Steuerspannungsquelle oder im Bereich der zweiten Steuerspannungsquelle eine Veränderung der charakteristischen Eigenschaften einer der Komponenten auftritt, führt dies zwingend zu einer Abweichung zwischen den Eingangssignalen am zweiten Operationsverstärker 122, so dass ein Fehler detektiert und signalisiert werden kann.

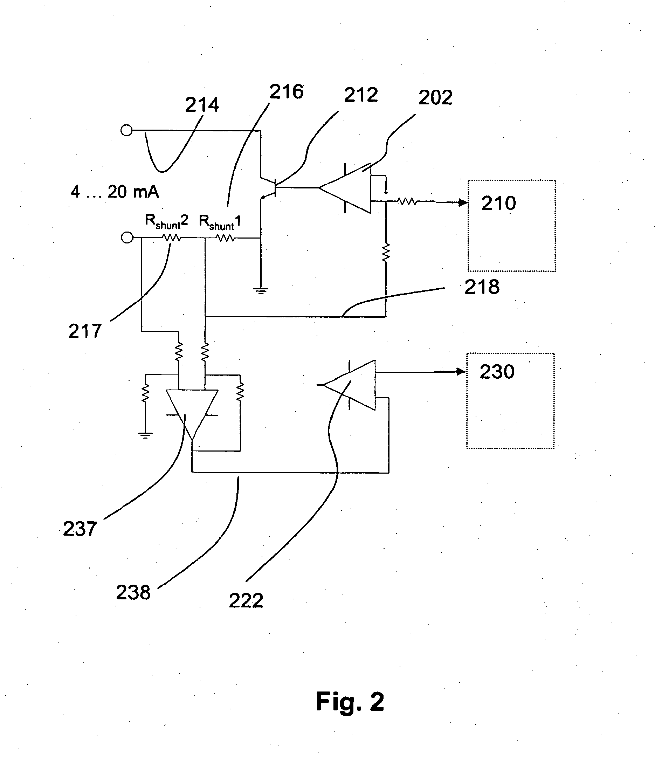

Bei den folgenden Ausführungsbeispielen sind die erste Steuerspannungsquelle und die zweite Steuerspannungsquelle jeweils genauso aufgebaut wie die erste und die zweite Steuerspannungsquelle des ersten Ausführungsbeispiels, so dass die Steuerspannungsquellen in den Zeichnungen der Ausführungsbeispiele entfallen können. Zudem sind in den Ausführungsbeispielen zum Zwecke der Vereinfachung äquivalente Komponenten mit den gleichen Zehner- und Einerziffern bezeichnet. Die äquivalenten Komponenten unterscheiden sich zwischen den Ausführungsbeispielen demnach lediglich durch die Hunderter Ziffer. Dementsprechend verweist das Bezugszeichen (→ 210) in Fig. 2 beispielsweise auf den Anschluss an den hier nicht mehr dargestellten Integrator der ersten Steuerspannungsquelle und das Bezugszeichen (→ 230) an den Anschluss des ebenfalls nicht mehr dargestellten Integrators der zweiten Steuerspannungsquelle. Entsprechendes gilt sinngemäß für die anderen Ausführungsbeispiele. Das zweite Ausführungsbeispiel umfasst wie zuvor einen ersten Operationsverstärker 202, der in Abhängigkeit von einer ersten Steuerspannung, die über den Integrator 210 bereitgestellt wird, einen Transistor 212 steuert, um den Strom in einer Stromschleife 214 zu stellen. Der Spannungsabfall über einen ersten Widerstand 216 in der Stromschleife wird über einen ersten Rückkopplungspfad 210 einem Knoten zugeführt, an dem ebenfalls der Integrator der ersten Steuerspannungsquelle angeschlossen ist, und welcher das Eingangssignal für den invertierenden Eingang des ersten Operationsverstärkers 202 definiert. Gegenüber dem ersten Ausführungsbeispiel unterscheidet sich das zweite Ausführungsbeispiel nun dadurch, dass auch der Shuntwiderstand 216 überwacht werden kann. Hierzu ist mit dem ersten Shuntwiderstand 217 in der Stromschleife 214 in Reihe geschaltet, wobei der Spannungsabfall über dem zweiten Shuntwiderstand 217 über einen Differenzverstärker 237 und einen zweiten Rückkopplungspfad 238 dem invertierenden Eingang eines zweiten Operationsverstärkers 222 zugeführt wird, an dessen nicht invertierendem Eingang der Ausgang des Integrators 230 einer zweiten Steuerspannungsquelle anliegt. Der zweite Shuntwiderstand 217 kann insbesondere den gleichen Widerstandswert aufweisen wie der erste Shuntwiderstand 216. Wie beim ersten Ausführungsbeispiel führen Abweichungen zwischen den Steuerspannungsquellen zu einer Diskrepanz zwischen den Eingängen des zweiten Operationsverstärkers 222, was zur Ausgabe eines Fehlers 71 führt. Darüber hinaus führt eine Veränderung des Widerstandsverhältnisses zwischen dem ersten Shuntwiderstand 216 und dem zweiten Shuntwiderstand 217 ebenfalls zu einer Diskrepanz an den Eingängen des zweiten Operationsverstärkers 222, wodurch ein Fehlersignal ausgelöst wird. Damit sind sämtliche analoge Komponenten, die in der Regelung des Ausgangsstroms auf der Zweileiterstromschleife 214 involviert sind, überwacht.

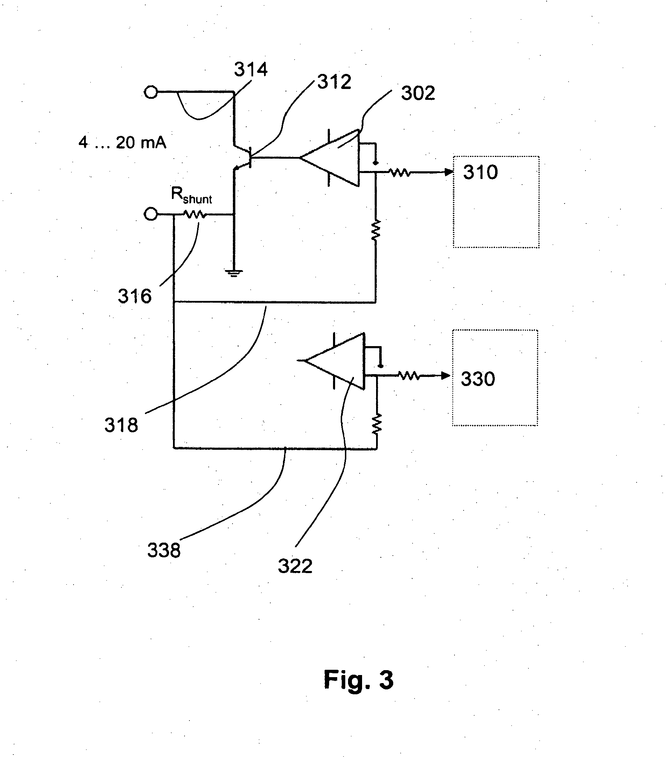

Das dritte Ausführungsbeispiel in Fig. 3 unterscheidet sich vom ersten Ausführungsbeispiel durch die Art des Anschlusses des zweiten Rückkopplungszweigs. Der Überwachungskreis umfasst hier nämlich einen zweiten Operationsverstärker 322, dessen invertierender Eingang an einen Knoten angeschlossen ist, an dem die Summe aus einer Rückkopplungsspannung und einer zweiten Steuerspannung anliegt, wobei diese Kopplungsspannung über einen Shuntwiderstand 316 in einer Stromschleife 314 abgegriffen wird und über einen zweiten Rückkopplungspfad 338 dem Knoten zugeführt wird, wobei der nicht invertierende Eingang des zweiten Operationsverstärkers auf Schaltungsmasse liegt. Insoweit entspricht die Beschaltung des zweiten Operationsverstärkers der Beschaltung des ersten Operationsverstärkers 302, wobei dieses Beschaltungsschema im Zusammenhang mit dem ersten Ausführungsbeispiel erörtert wurde.

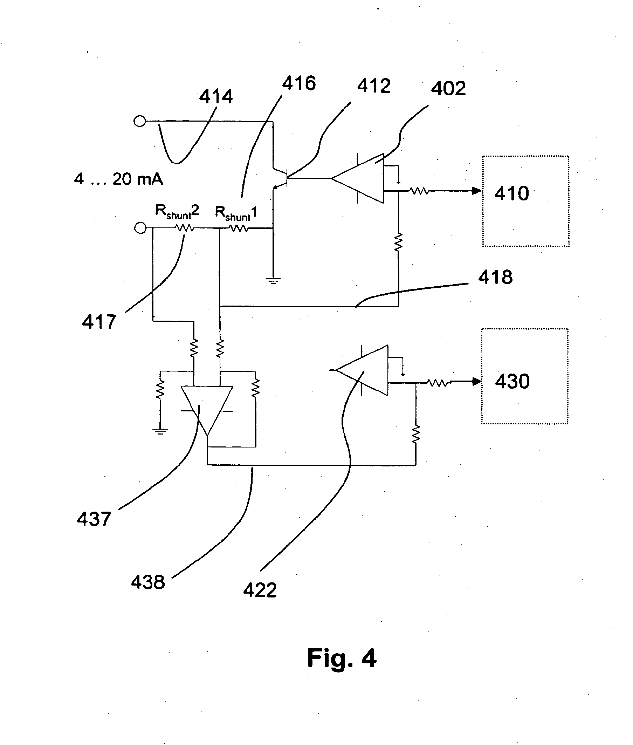

Das vierte Ausführungsbeispiel in Fig. 4 greift nun die Überwachung des ersten Shuntwiderstands im Stromregelkreis durch einen damit in Reihe geschalteten zweiten Shuntwiderstand auf, wie es im Zusammenhang mit dem zweiten Ausführungsbeispiel diskutiert wurde. Zudem ist der Operationsverstärker 422 des Überwachungskreises mit seinem invertierenden Eingang an einen Knoten angeschlossen, an welchem die Summe aus der zweiten Steuerspannung und der zweiten Rückkopplungsspannung anliegt, welche von dem Spannungsabfall über dem zweiten Shuntwiderstand 417 abhängt.

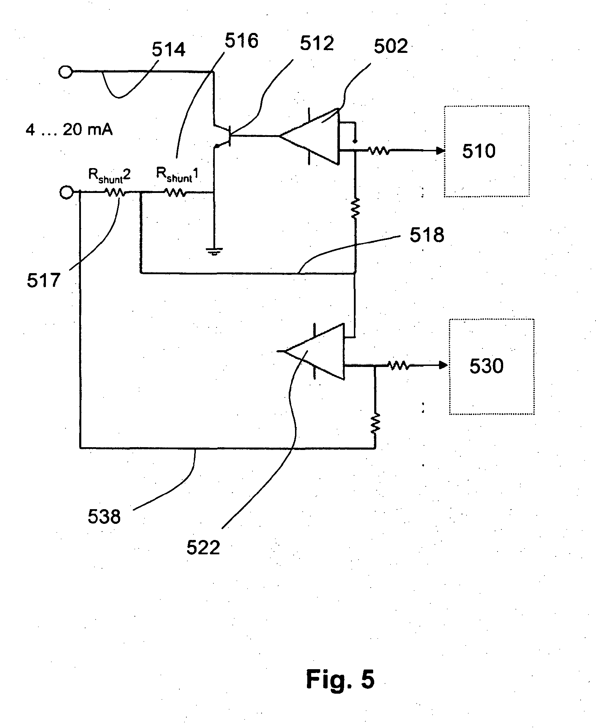

Das in Fig. 5 gezeigte fünfte Ausführungsbeispiel umfasst ebenfalls einen Überwachungskreis, bei welchem der invertierende Eingang des zweiten Operationsverstärkers 522 an einem Knoten liegt, dem eine zweite Steuerspannung 530 und eine zweite Rückkopplungsspannung über einen zweiten Rückkopplungspfad 538 zugeführt wird. In diesem Fall liegt eine erste Rückkopplungsspannung, welche den Spannungsabfall über den ersten Shuntwiderstand 516 erfasst und über einen ersten Rückkopplungspfad 518 dem Knoten am invertierenden Eingang des ersten Operationsverstärkers zugeführt wird, auch am nicht invertierenden Eingang des zweiten Operationsverstärkers an. Abweichungen zwischen dem ersten und dem zweiten Widerstand oder zwischen dem von der ersten Steuerspannungsquelle und der zweiten Steuerspannungsquelle ausgegebenen ersten und zweiten Steuerspannungen führen mit dieser Schaltung zu Diskrepanzen an den Eingängen des zweiten Operationsverstärkers 522 und somit zu einer Fehlermeldung.

Zusammenfassend bleibt festzustellen, dass die Art der Ansteuerung der Operationsverstärker im Regelkreis und Überwachungskreis und die Art der Zufuhr von Rückkopplungsspannungen auf verschiedene Weisen realisiert werden kann, welche für den Fachmann beliebig miteinander kombinierbar sind, um die erfindungsgemäße Überwachung der Stromstellung durch Überwachen der Steuerspannungsquellen und gegebenenfalls des Shuntwiderstands zu ermöglichen.

## Patentansprüche

1. Schaltung zum Regeln und Überwachen eines Signalstroms, welcher einen Zielwert repräsentiert, wobei der Zielwert insbesondere ein Messwert oder eine Regelwert ist, umfassend:
einen Regelkreis; und
einen Überwachungskreis (101),
wobei der Regelkreis umfasst:
eine erste Steuerspannungsquelle, zum Ausgeben einer zielwertabhängigen Steuerspannung;
eine Stromstellerschaltung (102,112) zum Stellen des Signalstroms in Abhängigkeit von der Steuerspannung und einer ersten Rückkopplungsspannung mittels eines regelbaren Widerstands (112); und
einen ersten Rückkopplungspfad, mit mindestens einem ersten Widerstandselement (116), über welches der Signalstrom fließt, wobei der Spannungsabfall über dem Widerstandselement oder eine davon abhängige Spannung der Stromstellerschaltung (102, 112) als erste Rückkopplungsspannung zugeführt wird;
**dadurch gekennzeichnet dass** der Überwachungskreis (101) umfasst:
eine zweite Steuerspannungsquelle, zum Ausgeben einer zweiten zielwertabhängigen Steuerspannung;
eine analoge Überwachungsschaltung, zum Feststellen von Abweichungen zwischen der zweiten Steuerspannung und einer zweiten Rückkopplungsspannung;
und einen zweiten Rückkopplungspfad, mit einem Widerstandselement (116), über welches der Signalstrom fließt, wobei der Spannungsabfall über dem Widerstandselement oder eine davon abhängige Spannung der Überwachungsschaltung (101) als zweite Rückkopplungsspannung zugeführt wird.

2. Schaltung nach Anspruch 1 wobei
die erste Steuerspannungsquelle, und die zweite Steuerspannungsquelle jeweils eine Integratorschaltung (110, 130) zum Integrieren einer pulsbreitenmodulierten Referenzspannung aufweisen.

3. Schaltung nach Anspruch 2, wobei die beiden Integratorschaltungen (110, 130) im wesentlichen die gleiche Zeitkonstante aufweisen.

4. Schaltung nach Anspruch einem der Ansprüche 1 bis 3, wobei die erste Steuerspannungsquelle, und die zweite Steuerspannungsquelle jeweils eine Referenzspannungsquelle (108, 128) zum Ausgeben einer Referenzspannung aufweisen.

5. Schaltung nach einem der Ansprüche 1 bis 4,
wobei die Stromstellerschaltung einen ersten Operationsverstärker (102) zum Steuern einer Transistorschaltung (112) mittels seiner Ausgangsspannung aufweist, wobei der Signalstrom über den Widerstand der Transistorschaltung (112) gestellt wird, wobei die Ausgangsspannung des ersten Operationsverstärkers (102) abhängt von einer Abweichung zwischen der ersten Steuerspannung und der ersten Rückkopplungsspannung,
wobei die Überwachungsschaltung (101) einen zweiten Operationsverstärker (122) zum Signalisieren einer Abweichung mittels seiner Ausgangsspannung aufweist, die Ausgangsspannung des zweiten Operationsverstärkers abhängt von einer Abweichung zwischen der zweiten Steuerspannung und der zweiten Rückkopplungsspannung.

6. Schaltung nach Anspruch 5, wobei ein erster Eingang des ersten Operationsverstärkers (102) an einen Knoten angeschlossen ist, an dem im Betrieb der Schaltung die Summe aus der ersten Steuerspannung und der ersten Rückkopplungsspannung anliegt, und wobei ein zweiter Eingang des ersten Operationsverstärkers (102) auf Schaltungsmasse liegt.

7. Schaltung nach Anspruch 5, wobei im Betrieb der Schaltung an einem ersten Eingang des ersten Operationsverstärkers (102) die erste Rückkopplungsspannung anliegt, und an einem zweiten Eingang des ersten Operationsverstärkers (102) die erste Steuerspannung anliegt.

8. Schaltung nach einem der Ansprüche 5 bis 7, wobei ein erster Eingang des zweiten Operationsverstärkers (122) an einen Knoten angeschlossen ist, an dem im Betrieb der Schaltung die Summe aus der zweiten Steuerspannung und der zweiten Rückkopplungsspannung anliegt, und wobei ein zweiter Eingang des zweiten Operationsverstärkers (122) auf Schaltungsmasse liegt.

9. Schaltung nach einem der Ansprüche 5 bis 7, wobei im Betrieb der Schaltung an einem ersten Eingang des zweiten Operationsverstärkers (122) die erste Rückkopplungsspannung anliegt, und an einem zweiten Eingang des zweiten Operationsverstärkers (122) die zweite Steuerspannung anliegt.

10. Schaltung nach einem der vorhergehenden Ansprüche, wobei im Betrieb der Schaltung der Spannungsabfall über dem ersten Widerstandselement (116) als erste Rückkopplungsspannung über den ersten Rückkopplungspfad an der Stromstellerschaltung (102, 112) und als zweite Rückkopplungsspannung über den zweiten Rückkopplungspfad an der Überwachungsschaltung (101) anliegt.

11. Schaltung nach einem der Ansprüche 1 bis 9, wobei die Schaltung weiterhin ein zweites Widerstandselement (217) umfasst, welches bezüglich des Signalstroms mit dem ersten (216) Widerstandselement in Reihe geschaltet ist,
wobei der Spannungsabfall über dem zweiten (217) Widerstandselement oder eine davon abhängige Spannung als zweite Rückkopplungsspannung über den zweiten Rückkopplungspfad an der Überwachungsschaltung (422) anliegt.

12. Schaltung nach Anspruch 11, wobei der zweite Rückkopplungspfad einen Differenzverstärker (437) umfasst dessen Ausgangsspannung eine Funktion des Spannungsabfalls über dem zweiten Widerstandselement (417) ist, wobei die Ausgangsspannung des Differenzverstärkers (437) als zweite Rückkopplungsspannung über den zweiten Rückkopplungspfad an der Überwachungsschaltung (422) anliegt.

13. Schaltung nach einem der Ansprüche 2 bis 12, wobei die erste Steuerspannungsquelle und die zweite Steuerspannungsquelle jeweils einen analogen Schalter (104, 124) umfassen, wobei die beiden Schalter von einem Schaltausgang eines Micro-Controllers (106, 126) gesteuert werden, um die pulsbreitenmodulierte Spannung zu erzeugen.

14. Messumformer, umfassend einen Sensor zum Bereitstellen eines messwertabhängigen Signals; eine Signalverarbeitungsschaltung zum Ermitteln eines Zielwerts anhand des messwertabhängigen Signals, wobei der Zielwert dem Messwert entspricht; und eine Schaltung nach einem der vorhergehenden Ansprüche zum Regeln und Überwachen eines Signalstroms, welcher den Zielwert repräsentiert.

## Claims

1. Circuit designed to regulate and monitor a signal current, which represents a target value, wherein the target value is, in particular, a measured value or a control value, comprising:
a control circuit, and
a monitoring circuit (101),
wherein the control circuit comprises:
a first control voltage source for outputting a control voltage that depends on the target value;
a current regulating circuit (102, 112) designed to regulate the signal current depending on the control voltage and a first feedback voltage using an adjustable resistor (112), and
a first feedback path with at least a first resistance element (116) via which the signal current flows, wherein the voltage drop over the resistance element or a voltage dependent thereon (102, 112) is supplied to the current regulating circuit as the first feedback voltage;
**characterized in that** the monitoring circuit (101) comprises:
a second control voltage source for outputting a second control voltage that depends on the target value;
an analog monitoring circuit for determining deviations between the second control voltage and a second feedback voltage,
and a second feedback path with a resistance element (116) via which the signal current flows, wherein the voltage drop over the resistance element or a voltage dependent thereon is supplied to the monitoring circuit (101) as the second feedback voltage.

2. Circuit as claimed in Claim 1, wherein the first control voltage source and the second control voltage source each has an integrator circuit (110, 130) to integrate a pulse-width-modulated reference voltage.

3. Circuit as claimed in Claim 2, wherein the two integrator circuits (110, 130) essentially have the same time constant.

4. Circuit as claimed in one of the Claims 1 to 3, wherein the first control voltage source and the second control voltage source each has a reference voltage source (108, 128) designed to output a reference voltage.

5. Circuit as claimed in one of the Claims 1 to 4,
wherein the current regulating circuit has a first operational amplifier (102) designed to control a transistor circuit (112) using its output voltage, wherein the signal current is set via the resistor of the transistor circuit (112), wherein the output voltage of the first operational amplifier (102) depends on a deviation between the first control voltage and the first feedback voltage,
wherein the monitoring circuit (101) has a second operational amplifier (122) designed to signal a deviation using its output voltage, the output voltage of the second operational amplifier depending on a deviation between the second control voltage and the second feedback voltage.

6. Circuit as claimed in Claim 5, wherein a first input of the first operational amplifier (102) is connected to a node at which the sum of the first control voltage and the first feedback voltage is applied when the circuit is in operation, and wherein a second input of the first operational amplifier (102) is at the circuit ground.

7. Circuit as claimed in Claim 5, wherein, when the circuit is in operation, the first feedback voltage is applied at a first input of the first operational amplifier (102), and the first control voltage is applied at a second input of the first operational amplifier (102).

8. Circuit as claimed in one of the Claims 5 to 7, wherein a first input of the second operational amplifier (122) is connected to a node at which the sum of the second control voltage and the second feedback voltage is applied when the circuit is in operation, and wherein a second input of the second operational amplifier (122) is at the circuit ground.

9. Circuit as claimed in one of the Claims 5 to 7, wherein, when the circuit is in operation, the first feedback voltage is applied at a first input of the second operational amplifier (122), and the second control voltage is applied at a second input of the second operational amplifier (122).

10. Circuit as claimed in one of the previous claims, wherein, when the circuit is in operation, the voltage drop over the first resistance element (116) is applied at the current regulation circuit (102, 112) as the first feedback voltage via the first feedback path and at the monitoring circuit (101) as a second feedback voltage via the second feedback path.

11. Circuit as claimed in one of the Claims 1 to 9, wherein the circuit further comprises a second resistance element (217) which in relation to the signal current is connected in series with the first (216) resistance element,
wherein the voltage drop over the second resistance element (217) or a voltage dependent thereon is applied at the monitoring circuit (422) as a second feedback voltage via the second feedback path.

12. Circuit as claimed in Claim 11, wherein the second feedback path comprises a differential amplifier (437) whose output voltage is a function of the voltage drop over the second resistance element (417), wherein the output voltage of the differential amplifier (437) is applied at the monitoring circuit (422) as a second feedback voltage via the second feedback path.

13. Circuit as claimed in one of the Claims 2 to 12, wherein the first control voltage source and the second control voltage source each comprises an analog circuit (104, 124), wherein the two circuits are controlled by a switch output of a microcontroller (106, 126) in order to generate the pulse-width-modulated voltage.

14. Transmitter comprising a sensor for providing a signal dependent on the measured value; a signal processing circuit for determining a target value using the signal that depends on the measured value, wherein the target value corresponds to the measured value; and a circuit as claimed in one of the previous claims for regulating and monitoring a signal current which represents the target value.

## Revendications

1. Circuit destiné à réguler et à surveiller un courant de signal, lequel représente une valeur cible, la valeur cible étant notamment une valeur mesurée ou une valeur régulée, comprenant :
un circuit de régulation, et
un circuit de surveillance (101),
le circuit de régulation comprenant :
une première source de tension de commande destinée à délivrer une tension de commande dépendant de la valeur cible ;
un circuit régulateur de courant (102, 112) destiné à réguler le courant de signal en fonction de la tension de commande et d'une première tension de rétroaction au moyen d'une résistance réglable (112), et
une première chaîne de rétroaction, avec au moins un premier élément de résistance (116), par l'intermédiaire duquel circule le courant de signal, la chute de tension à travers l'élément de résistance ou une tension en dépendant du circuit régulateur de courant (102, 112) étant appliquée en tant que première tension de rétroaction ;
**caractérisé en ce que** le circuit de surveillance (101) comprend :
une deuxième source de tension de commande destinée à délivrer une deuxième tension de commande dépendant de la valeur cible ;
un circuit de surveillance analogique destiné à déterminer les écarts entre la deuxième tension de commande et une deuxième tension de rétroaction,
et une deuxième chaîne de rétroaction, avec au moins un élément de résistance (116),
par l'intermédiaire duquel circule le courant de signal, la chute de tension à travers l'élément de résistance ou une tension en dépendant du circuit de surveillance (101) étant appliquée en tant que deuxième tension de rétroaction.

2. Circuit selon la revendication 1, pour lequel la première source de tension de commande et la deuxième source de tension de commande comportent chacune un circuit intégrateur (110, 130) destiné à intégrer une tension de référence modulée en largeur d'impulsion.

3. Circuit selon la revendication 2, pour lequel les deux circuits intégrateurs (110, 130) présentent pour l'essentiel la même constante de temps.

4. Circuit selon l'une des revendications 1 à 3, pour lequel la première source de tension de commande et la deuxième source de tension de commande comportent chacune une source de tension de référence (108, 128) destinée à délivrer une tension de référence.

5. Circuit selon l'une des revendications 1 à 4,
pour lequel le circuit de régulation de courant comporte un premier amplificateur opérationnel (102) destiné à piloter un circuit à transistor (112) au moyen de sa tension de sortie, le courant de signal étant réglé au moyen de la résistance du circuit à transistor (112), la tension de sortie du premier amplificateur opérationnel (102) dépendant d'un écart entre la première tension de commande et la première tension de rétroaction,
pour lequel le circuit de surveillance (101) comporte un deuxième amplificateur opérationnel (122) destiné à signaler un écart au moyen de sa tension de sortie, la tension de sortie du deuxième amplificateur opérationnel dépendant d'un écart entre la deuxième tension de commande et la deuxième tension de rétroaction

6. Circuit selon la revendication 5, pour lequel une première entrée du premier amplificateur opérationnel (102) est raccordée à un noeud, auquel est appliquée, pendant le fonctionnement du circuit, la somme constituée de la première tension de commande et de la première tension de rétroaction, et une deuxième entrée du premier amplificateur opérationnel (102) étant reliée à la masse du circuit.

7. Circuit selon la revendication 5, pour lequel, pendant le fonctionnement du circuit, la première tension de rétroaction est appliquée à une première entrée du premier amplificateur opérationnel (102), et la première tension de commande est appliquée à une deuxième entrée du premier amplificateur opérationnel (102).

8. Circuit selon l'une des revendications 5 à 7, pour lequel une première entrée du deuxième amplificateur opérationnel (122) est raccordée à un noeud, auquel est appliquée, pendant le fonctionnement du circuit, la somme constituée de la deuxième tension de commande et de la deuxième tension de rétroaction, et une deuxième entrée du deuxième amplificateur opérationnel (122) étant reliée à la masse du circuit.

9. Circuit selon l'une des revendications 5 à 7, pour lequel, pendant le fonctionnement du circuit, la première tension de rétroaction est appliquée à une première entrée du deuxième amplificateur opérationnel (122), et la deuxième tension de commande à une deuxième entrée du deuxième amplificateur opérationnel (122).

10. Circuit selon l'une des revendications précédentes, pour lequel, pendant le fonctionnement du circuit, la chute de tension à travers le premier élément de résistance (116) est appliquée au circuit de régulation de courant (102, 112) en tant que première tension de rétroaction à travers la première chaîne de rétroaction et au circuit de surveillance (101) en tant que deuxième tension de rétroaction à travers la deuxième chaîne de rétroaction.

11. Circuit selon l'une des revendications 1 à 9, pour lequel le circuit comprend un deuxième élément de résistance (217), lequel est couplé en série avec le premier élément de résistance (216) par rapport au courant de signal,
la chute de tension à travers le deuxième élément de résistance (217) ou une tension en dépendant étant appliquée au circuit de surveillance (422) en tant que deuxième tension de rétroaction par l'intermédiaire de la deuxième chaîne de rétroaction.

12. Circuit selon la revendication 11, pour lequel la deuxième chaîne de rétroaction comprend un amplificateur différentiel (437), dont la tension de sortie est une fonction de la chute de tension à travers le deuxième élément de résistance (417), la tension de sortie de l'amplificateur différentiel (437) étant appliquée au circuit de surveillance (422) par l'intermédiaire de la deuxième chaîne de rétroaction.

13. Circuit selon l'une des revendications 2 à 12, pour lequel la première source de tension de commande et la deuxième source de tension de commande comportent chacune un interrupteur analogique (104, 124), les deux interrupteurs étant commandés par la sortie de commutation d'un microcontrôleur (106, 126) afin de générer la tension modulée en largeur d'impulsion.

14. Transmetteur de mesure, comprenant un capteur destiné à fournir un signal dépendant de la valeur mesurée ; un circuit de traitement de signal destiné à déterminer une valeur cible au moyen du signal dépendant de la valeur mesurée, la valeur cible correspondant à la valeur mesurée ; et un circuit selon l'une des revendications précédentes destiné à la régulation et la surveillance d'un signal de courant, lequel représente la valeur cible.
